# FASCICULE DE BREVET EUROPEEN

(11) **EP 1 108 939 B1**
(45) Date de publication et mention de la délivrance du brevet: **14.06.2006**
(21) Numéro de dépôt: 00403449.2
(22) Date de dépôt: 08.12.2000
(51) Int. Cl.: F16L 15/04, F16L 41/00

(54) **Procédé de raccordement de circuits de fluide et raccord pour sa mise en oeuvre**
Verfahren zum Verbinden von Flüssigkeitskreisläufen und Kupplung für die Durchführung des Verfahrens
Process for connecting fluid circuits and and connector for carrying out the process

(30) Priorité: 14.12.1999 FR 9915736
(43) Date de publication de la demande: 20.06.2001
(73) Titulaire: Abiven, Guy, 44300 Nantes (FR)
(72) Inventeur: Abiven, Guy, 44300 Nantes (FR)
(74) Mandataire: Laget, Jean-Loup

(56) Documents cités:
- CH-A- 406 758
- CH-A- 417 241
- DE-A- 1 814 373

## Description

La présente invention concerne un procédé de raccordement de circuit de fluide et un raccord permettant la mise en oeuvre d'un tel procédé.

Les circuits de circulation de fluide, tels que les circuits de circulation de gaz ou de fluide à pression élevée, doivent présenter une étanchéité parfaite. Or, il est connu que la présence d'un ou plusieurs raccords sur un tel circuit nuit à cette étanchéité. L'obtention d'une étanchéité parfaite s'avère encore plus difficile lorsque le raccord est de type orientable. En effet, les raccords orientables sont généralement constitués d'au moins deux extrémités de raccordement formant entre elles un angle quelconque. Au moins une des extrémités de raccordement est filetée pour recevoir d'une part une pièce à raccorder taraudée, d'autre part un contre-écrou. Ce filetage est interrompu pour former une gorge de réception d'un joint annulaire et d'une rondelle destinée à appliquer le joint contre la face frontale de la pièce à raccorder sous l'effet d'un couple de serrage exercé sur ledit contre-écrou.

L'obligation de disposer constamment de pièces pouvant être mobiles, comme peuvent l'être la rondelle et le joint montés à un montage complexe pour garantir cette étanchéité.

La solution technique la plus fréquente consiste à ménager, dans l'extrémité libre de raccordement d'une pièce à raccorder au raccord, un chanfrein destiné à loger, lors du serrage, le joint annulaire porté par le raccord. Cette solution technique limite les possibilités d'utilisation d'un tel raccord qui ne s'applique qu'à une pièce à raccorder chanfreinée.

Une autre solution est décrite dans le document allemand DE-A-1.1.814.373. Ce document décrit un procédé de raccordement de circuit de fluide au moyen d'un raccord orientable sur 360°. Ce procédé se caractérise par l'utilisation d'une rondelle à gorge, le fond de la gorge étant constitué d'un fond tronconique déformable sous l'effet d'une force axiale. Ainsi, cette rondelle peut être introduite à coulissement sur le filetage externe d'une extrémité à raccorder du raccord de manière à venir s'étendre au droit de la gorge dudit raccord puis le fond de cette rondelle est aplati de sorte que le diamètre intérieur de la gorge de la rondelle est adapté au raccord. Il est donc nécessaire d'exercer un effort axial sur le fond conique de la rondelle pour adapter la gorge de cette rondelle aux dimensions du raccord. Cette déformation particulière nécessite d'utiliser des rondelles à gorge particulières, à savoir des rondelles à gorge munies de fond conique. Il en résulte donc à nouveau une complexité du procédé et du raccord du fait de l'impossibilité d'utiliser des pièces de conception standard.

Un but de la présente invention est de proposer un raccord et un procédé de raccordement applicables à toute pièce raccordée sans configuration particulière de cette pièce à raccorder.

Un autre but de la présente invention est de proposer un raccord orientable de conception simple, fabriqué essentiellement à partir d'éléments standards.

A cet effet, l'invention a pour objet un procédé de raccordement de circuit de fluide au moyen d'un raccord orientable à la demande sur 360° pour donner au circuit de fluide un profilé non rectiligne, ce raccord comportant au moins deux extrémités de raccordement formant entre elles un angle quelconque, au moins l'une des extrémités de raccordement étant filetée pour recevoir d'une part une pièce à raccorder taraudée, d'autre part un contre-écrou, ce filetage étant interrompu pour former une gorge de réception d'un joint annulaire, de préférence torique et d'une rondelle ou bague destinée à appliquer le joint contre la face frontale de la pièce à raccorder sous l'effet d'un couple de serrage exercé sur ledit contre-écrou, procédé caractérisé en ce qu'on introduit librement ladite rondelle sur le filetage de l'extrémité de raccordement jusqu'au niveau de la gorge, cette rondelle possédant une gorge périphérique interne pour la réception et la contention du joint, en ce que l'on rétreint mécaniquement la rondelle de manière à ce que le bord périphérique de la gorge de la rondelle soit au contact de la périphérie externe du joint annulaire tout en maintenant un jeu de la rondelle dans la gorge de l'extrémité de raccordement, en ce qu'on assemble le raccord avec la pièce à raccorder suivant une orientation angulaire quelconque et en ce qu'on procède au serrage du contre-écrou sur la rondelle à gorge contre la face de la pièce à raccorder.

L'utilisation d'une rondelle à gorge dont les dimensions peuvent être réduites pour s'adapter parfaitement aux profils du corps du raccord et du joint d'étanchéité permet de disposer d'un procédé de mise en oeuvre aisé.

L'invention a encore pour objet un raccord orientable à la demande sur 360° pour donner à un circuit de fluide un profil non rectiligne, ce raccord comportant au moins deux extrémités de raccordement formant entre elles un angle quelconque, au moins l'une des extrémités de raccordement étant filetée pour recevoir d'une part une pièce à raccorder taraudée, d'autre part un contre-écrou, ce filetage étant interrompu pour former une gorge de réception d'un joint annulaire, de préférence torique, et d'une rondelle ou bague destinée à appliquer le joint contre la face frontale de la pièce à raccorder sous l'effet du couple de serrage exercé sur ledit contre-écrou, raccord caractérisé en ce que la rondelle comporte une gorge périphérique interne ouverte en direction de la pièce à raccorder, cette gorge étant adaptable à la dimension de la périphérie externe du joint annulaire par rétreint mécanique de la rondelle à gorge.

L'invention sera bien comprise à la lecture de la description suivante d'un exemple de réalisation, en référence aux dessins annexés dans lesquels :

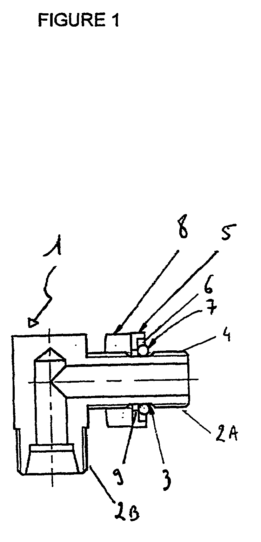

la figure 1 représente une vue en coupe d'un raccord avant rétreint de la rondelle ;
la figure 2 représente une vue en coupe d'un raccord conforme à l'invention après rétreint de la rondelle et
la figure 3 représente une vue en coupe d'un raccord conforme à l'invention à l'état assemblé à une pièce à raccorder.

Le raccord 1, objet de l'invention, est plus particulièrement destiné à des circuits de fluide tels que des circuits de gaz. Ce raccord orientable à la demande sur 360° est constitué, de manière en soi connue, d'un corps de raccord comportant au moins deux extrémités 2A, 2B de raccordement formant entre elles un angle quelconque. Dans les exemples représentés, cet angle est égal à 90°. L'une des extrémités de raccordement, en l'occurrence l'extrémité 2A, est filetée (filetage 4) pour recevoir d'une part la pièce 9 à raccorder taraudée, dite élément femelle, d'autre part un contre-écrou 8 constitué également d'un élément standard. Le filetage 4 est interrompu pour former une gorge 3, généralement annulaire, de réception d'un joint 7 annulaire, de préférence torique et d'une rondelle 5 ou bague destinée à appliquer le joint 7 contre la face frontale de la pièce 9 à raccorder sous l'effet d'un couple de serrage exercé sur ledit contre-écrou 8. Cette rondelle 5 est, dans un premier temps, introduite librement sur l'extrémité 2A de raccordement après introduction du contre-écrou 8 sur cette même extrémité de raccordement. L'introduction de la rondelle 5 s'effectue jusqu'au niveau de la gorge 3 de l'extrémité 2A de raccordement du raccord. Cette rondelle 5 possède elle-même une gorge 6 périphérique interne de profil complémentaire au profil du joint 7 annulaire de préférence torique. Cette gorge 6 sert au logement du joint 7. Les dimensions initiales de la rondelle 5 sont largement supérieures à celle de l'extrémité de raccordement pour permettre une telle introduction libre. Une fois la rondelle 5 introduite, le joint 7 est lui-même introduit librement sur l'extrémité 2A de raccordement filetée du raccord pour venir se loger dans la gorge 3 de l'extrémité 2A de raccordement du raccord en enserrant cette dernière.

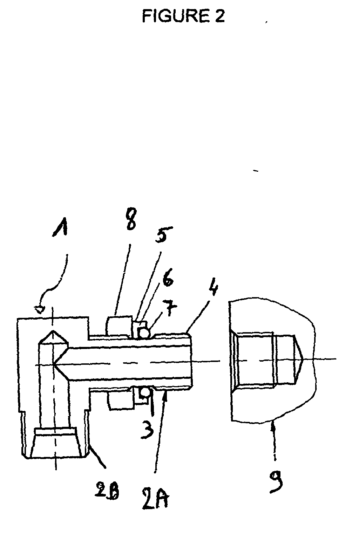

Dans un second temps, correspondant à la figure 2, on rétreint mécaniquement la rondelle 5 de manière à ce que le bord périphérique de la gorge 6 de la rondelle 5 soit au contact de la périphérie externe du joint 7 annulaire tout en maintenant un jeu de la rondelle dans la gorge 3 du raccord de manière à permettre l'entraînement en rotation de ladite rondelle 5 et un déplacement axial de cette rondelle 5 à l'intérieur de la gorge 3.

L'opération de rétreint est généralement effectuée au moyen de deux mâchoires enserrant le pourtour de la rondelle 5. Ces mâchoires, de profil complémentaire à celui de la rondelle 5, sont entraînées en déplacement dans le sens d'un rapprochement par des organes d'actionnement appropriés tels que des vérins pour provoquer une réduction de la dimension de la rondelle 5 de telle sorte que le bord périphérique interne de la rondelle 5 s'adapte parfaitement au profil de la gorge 3 de l'extrémité 2A de raccordement du raccord 1 toute en autorisant un jeu au moins axial de la rondelle 5 dans ladite gorge 3. Cette opération s'effectue généralement en quelques secondes.

Bien évidemment, il convient de régler avec précision la course des organes d'actionnement tels que les vérins pour maintenir un jeu entre rondelle 5 et gorge 3 de l'extrémité 2A de raccordement du raccord 1. Après rétreint, la rondelle 5 assure la contention du joint 7 annulaire de sorte que tout fluage du joint 7 en direction de l'extérieur ou en direction de l'extrémité 2A de raccordement est empêché.

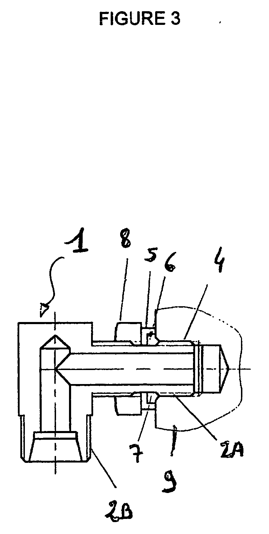

Une fois l'opération de rétreint effectuée, le raccord 1 est prêt à être raccordé à une pièce 9 à raccorder quelconque. Pour permettre ce raccordement, le raccord 1 et la pièce 9 à raccorder sont vissés jusqu'à ce que le raccord 1 occupe une orientation angulaire choisie par l'opérateur. Il est alors procédé au serrage du contre-écrou 8 sur la rondelle 5 à gorge 6 contre la face frontale de la pièce 9 à raccorder comme le montre la figure 3. Le joint 7 parfaitement maintenu à l'intérieur de la gorge 6 de la rondelle 5 à gorge 6 assure alors une étanchéité parfaite de l'ensemble.

## Revendications

1. Procédé de raccordement de circuit de fluide au moyen d'un raccord (1) orientable à la demande sur 360° pour donner au circuit de fluide un profilé non rectiligne, ce raccord comportant au moins deux extrémités (2A, 2B) de raccordement formant entre elles un angle quelconque, au moins l'une (2A) des extrémités (2A, 2B) de raccordement étant filetée (4) pour recevoir d'une part une pièce (9) à raccorder taraudée, d'autre part un contre-écrou (8), ce filetage (4) étant interrompu pour former une gorge (3) de réception d'un joint (7) annulaire, de préférence torique, et d'une rondelle (5) ou bague destinée à appliquer le joint (7) contre la face frontale de la pièce (9) à raccorder sous l'effet d'un couple de serrage exercé sur ledit contre-écrou (8),
procédé dans lequel on introduit librement ladite rondelle (5) sur le filetage (4) de l'extrémité (2A) de raccordement jusqu'au niveau de la gorge (3) de l'extrémité (2A), cette rondelle (5) possédant une gorge (6) périphérique interne pour la réception et la contention du joint (7), en ce que l'on rétreint mécaniquement la rondelle (5) par action sur le pourtour de la rondelle de manière à ce que le bord périphérique externe de la gorge (6) périphérique interne de la rondelle (5) soit au contact de la périphérie externe du joint (7) annulaire tout en maintenant un jeu de la rondelle (5) dans la gorge (3) de l'extrémité (2A), en ce qu'on assemble le raccord (1) avec la pièce (9) à raccorder suivant une orientation angulaire quelconque et en ce qu'on procède au serrage du contre-écrou (8) sur la rondelle (5) à gorge (6) périphérique interne contre la face de la pièce (9) à raccorder.

2. Raccord (1) orientable à la demande sur 360° pour donner à un circuit de fluide un profil non rectiligne, ce raccord comportant au moins deux extrémités (2A, 2B) de raccordement formant entre elles un angle quelconque, au moins l'une (2A) des extrémités de raccordement étant filetée (4) pour recevoir d'une part une pièce (9) à raccorder taraudée, d'autre part un contre-écrou (8), ce filetage (4) étant interrompu pour former une gorge (3) de réception d'un joint (7) annulaire, de préférence torique, et d'une rondelle (5) ou bague destinée à appliquer le joint (7) contre la face frontale de la pièce (9) à raccorder sous l'effet du couple de serrage exercé sur ledit contre-écrou (8),
raccord (1) **caractérisé en ce que** la rondelle (5) comporte une gorge (6) périphérique interne ouverte en direction de la pièce (9) à raccorder, cette gorge (6) périphérique interne étant adaptée à la dimension de la périphérie externe du joint (7) annulaire par rétreint mécanique de la rondelle (5) à gorge (6) périphérique interne par action sur le pourtour de la rondelle.

## Claims

1. Method of connecting a fluid circuit by means of a connection (1) which can be orientated as required through 360° to give to the fluid circuit a non-rectilinear profile, this connection comprising at least two connection ends (2A, 2B), which form therebetween any angle, at least one end (2A) of the connection ends (2A, 2B) being threaded (4) to receive, on the one hand, a threaded part (9) to be connected and, on the other hand, a counter-nut (8), this thread (4) being interrupted to form a groove (3) for receiving an annular, preferably toric, joint (7), and a washer (5) or ring intended to apply the joint (7) against the front face of the part (9) to be connected by the effect of a tightening couple exerted on said counter-nut (8), a method in which said washer (5) is freely introduced onto the thread (4) of the connection end (2A) as far as the level of the groove (3) of the end (2A), this washer (5) possessing an internal peripheral groove (6) for receiving and containing the joint (7), the washer (5) is mechanically restrained by action on the periphery of the washer in such a way that the external peripheral edge of the internal peripheral groove (6) of the washer (5) is in contact with the external periphery of the annular joint (7), while maintaining a clearance of the washer (5) in the groove (3) of the end (2A), the connection (1) is assembled with the part (9) to be connected according to any angular orientation, and the counter-nut (8) is then tightened on the washer (5) with the internal peripheral groove (6) against the face of the part (9) to be connected.

2. Connection (1) which can be orientated as required through 360° to give to a fluid circuit a non-rectilinear profile, this connection comprising at least two connection ends (2A, 2B), which form therebetween any angle, at least one end (2A) of the connection ends being threaded (4) to receive, on the one hand, a threaded part (9) to be connected and, on the other hand, a counter-nut (8), this thread (4) being interrupted to form a groove (3) for receiving an annular, preferably toric, joint (7), and a washer (5) or ring intended to apply the joint (7) against the front face of the part (9) to be connected by the effect of the tightening couple exerted on said counter-nut (8), a connection (1) **characterised in that** the washer (5) includes an internal peripheral groove (6) open in the direction of the part (9) to be connected, this internal peripheral groove (6) being adapted to the dimension of the external periphery of the annular joint (7) by mechanical restraint of the washer (5) with the internal peripheral groove (6) by action on the periphery of the washer.

## Patentansprüche

1. Verfahren zum Anschließen eines Fluidkreislaufes mittels eines bedarfsweise um 360° orientierbaren Anschlusses (1), um dem Fluidkreislauf einen nicht geradlinigen Verlauf zu verleihen, wobei dieser Anschluss mindestens zwei Anschluss-Enden (2A, 2B) aufweist, die miteinander einen beliebigen Winkel bilden, wobei mindestens das eine (2A) der Anschluss-Enden (2A, 2B) ein Gewinde (4) aufweist, um einerseits ein mit Innengewinde versehenes anzuschließendes Teil (9) und andererseits eine Kontermutter (8) aufzunehmen, wobei dieses Gewinde (4) unterbrochen ist, um eine Kehle (3) zur Aufnahme einer bevorzugt torischen Ringdichtung (7) und einer Scheibe (5) oder eines Rings zum Anlegen der Dichtung (7) an die Vorderseite des unter der Wirkung eines auf die Kontermutter (8) ausgeübten Anziehmoments anzuschließenden Teils (9) zu bilden, bei dem
die Scheibe (5) locker auf das Gewinde (4) des Anschluss-Endes (2A) bis zur Höhe der Kehle (3) des Endes (2A) eingefädelt wird, wobei diese Scheibe (5) eine umlaufende Innenkehle (6) für die Aufnahme und das Festhalten der Dichtung (7) besitzt, wobei bei dem Verfahren
die Scheibe (5) durch Einwirkung auf den Scheibenumfang derart mechanisch reduziert wird, dass der umlaufende Außenränd der umlaufenden Innenkehle (6)der Scheibe (5) mit dem Außenumfang der Ringdichtung (7) in Kontakt steht und dabei ein Spiel der Scheibe (5) in der Kehle (3) des Endes (2A) beibehalten wird, der Anschluss (1) mit dem anzuschließenden Teil (9) mit einer beliebigen Winkelausrichtung verbunden wird und
die Gegenmutter (8) auf der Scheibe (5) mit umlaufender Innenkehle (6) gegen die Fläche des anzuschließenden Teils (9) angezogen wird.

2. Bedarfsweise um 360° orientierbarer Anschluss (1), um einem Fluidkreislauf einen nicht geradlinigen Verlauf zu verleihen, wobei dieser Anschluss mindestens zwei Anschluss-Enden (2A, 2B) aufweist, die miteinander einen beliebigen Winkel bilden, wobei mindestens das eine (2A) der Anschluss-Enden ein Gewinde (4) aufweist, um einerseits ein mit Innengewinde versehenes anzuschließendes Teil (9) und andererseits eine Kontermutter (8) aufzunehmen, wobei dieses Gewinde (4) unterbrochen ist, um eine Kehle (3) zur Aufnahme einer bevorzugt torischen Ringdichtung (7) und einer Scheibe (5) oder eines Rings zum Anlegen der Dichtung (7) an die Vorderseite des unter der Wirkung des auf die Kontermutter (8) ausgeübten Anziehmoments anzuschließenden Teils (9) zu bilden, **dadurch gekennzeichnet, dass** die Scheibe (5) eine umlaufende Innenkehle (6) aufweist, die in der Richtung des anzuschließenden Teils (9) offen ist, wobei diese umlaufende Innenkehle (6) an die Abmessung des Außenumfangs der Ringdichtung (7) durch mechanisches Reduzieren der Scheibe (5) mit umlaufender Innenkehle (6) durch Einwirkung auf den Umfang der Scheibe angepasst ist.
